# EUROPÄISCHE PATENTSCHRIFT

(11) **EP 3 313 051 B1**
(45) Veröffentlichungstag und Bekanntmachung des Hinweises auf die Patenterteilung: **12.06.2019**
(21) Anmeldenummer: 17197572.5
(22) Anmeldetag: 20.10.2017
(51) Int. Cl.: H04L 29/08, H04L 29/12, G01D 4/00

(54) **VERFAHREN ZUR ADRESSVERGABE FÜR EINE VIELZAHL VON ZÄHLERN ZUR VERBRAUCHSMESSUNG SOWIE SYSTEM AUS GATEWAY, MASTER-ADAPTER UND SLAVE-ADAPTER**
METHOD FOR ADDRESS ALLOCATION FOR A PLURALITY OF COUNTERS FOR THE MEASUREMENT OF CONSUMPTION AND SYSTEM COMPRISING GATEWAY, MASTER ADAPTER AND SLAVE ADAPTER
PROCÉDÉ D'ATTRIBUTION D'ADRESSE POUR UNE PLURALITÉ DE COMPTEURS DE MESURE DESTINÉS AU COMPTAGE AINSI QUE SYSTÈME COMPORTANT LA PASSERELLE, L'ADAPTATEUR MAÎTRE ET L'ADAPTATEUR D'ESCLAVE

(30) Priorität: 20.10.2016 DE 102016120051
(43) Veröffentlichungstag der Anmeldung: 25.04.2018
(73) Patentinhaber: HAUSHELD AG, 41061 Mönchengladbach (DE)
(72) Erfinder: Stoffelsma, Bouke, 41239 Mönchengladbach (DE)
(74) Vertreter: Hauck Patentanwaltspartnerschaft mbB

(56) Entgegenhaltungen:
- WO-A1-2013/016534
- US-A1- 2015 084 547
- Bundesamt F?r Sicherheit In Der Informationstechnik Bsi: "Technische Richtline BSI TR-03109-1 Anforderungen an die Interoperabilit?t der Kommunikationseinheit eines intelligenen Messsystems", , 18. März 2013 (2013-03-18), XP055419352, Gefunden im Internet: URL:https://www.bsi.bund.de/SharedDocs/Dow nloads/DE/BSI/Publikationen/TechnischeRich tlinien/TR03109/TR03109-1.pdf?__blob=publi cationFile&v=1 [gefunden am 2017-10-26]
- Bundesamt Für Sicherheit In Der Informationstechnik: "BSI TR-03109-1 Anlage IVa: Feinspezifikation "Drahtgebundene LMN-Schnittstelle" Teil a: "HDLC für LMN"", , 18. März 2013 (2013-03-18), XP055450130, Gefunden im Internet: URL:https://www.bsi.bund.de/SharedDocs/Dow nloads/DE/BSI/Publikationen/TechnischeRich tlinien/TR03109/TR-03109-1_Anlage_Feinspez ifikation_Drahtgebundene_LMN-Schnittstelle .pdf;jsessionid=B5C88C6CBBC6673AE25B27A9F0 FD53CE.2_cid369?__blob=publicationFile&v=2 [gefunden am 2018-02-12]

## Beschreibung

Die vorliegende Erfindung betrifft ein Verfahren zur Adressvergabe für eine Vielzahl von Zählern zur Verbrauchsmessung. Ebenso betrifft die Erfindung ein System, bestehend aus mindestens einem Master-Adapter und mindestens einem Slave-Adapter, die zu einer bidirektionalen Datenkommunikation über ein Funknetzwerk ausgebildet sind.

Aus US 2007/0265861 A1 ist ein Kommunikationssystem bekannt, das durch eine geringe Latenzzeit gekennzeichnet ist, einen Datenaustausch mit einer hohen Latenzzeit vorzunehmen, ohne im Wesentlichen die Kommunikationsinfrastruktur aufzugeben. Hierzu werden Daten unter Verwendung des Netzwerks mit großer Latenzzeit ansprechend auf einen ersten Versuch des Netzes mit niedriger Latenzzeit gesammelt und ansprechend auf einen zweiten Versuch aus dem Netz mit niedriger Latenzzeit dann vervollständigt.

Aus DE 60 2004 010 547 T2 ist ein Verfahren, eine Vorrichtung und ein System zur Datenübertragung und -verarbeitung in einer drahtlosen Kommunikationsumgebung bekannt. Hierbei werden aus einer Vielzahl von Benutzerstationen diejenigen Stationen ausgewählt, deren Signalqualität am besten ist.

Aus US 2008/0208789 A1 ist ein Verfahren bekannt, bei dem Probleme einer hohen Latenzzeit im Zusammenhang mit Web-Anfragen reduziert werden, indem ein Proxy-Server parallel Voraussagen trifft und Inhalte bereits vorweg lädt.

Aus der technischen Richtlinie BSI TR-03109-1 vom 18. März 2013, veröffentlicht durch das Bundesamt für Sicherheit in der Informationstechnik, sind Anforderungen an die Interoperabilität der Kommunikationseinheit eines intelligenten Messsystems bekannt geworden. Demnach sollen im Zuge der Einrichtung von intelligenten Netzen (smart grids) intelligente Messsysteme (smart metering systems) zum Einsatz kommen. Die zentrale Kommunikationseinheit wird in dem System durch ein "Smart Meter Gateway" oder auch kurz "Gateway" gebildet. Dieses Smart Meter Gateway besitzt verschiedene Kommunikationsbereiche. Ein Kommunikationsbereich ist hierbei das lokale metrologische Netzwerk (local metrological network, LMN), in dem das Smart Meter Gateway mit verbundenen Zählern für Stoff- und Energiemengen (Strom, Gas, Wasser, Wärme) eines oder mehrerer Letztverbraucher kommuniziert. Die Zähler kommunizieren ihre Messwerte über das lokale metrologische Netzwerk an das Smart Meter Gateway. Die Hauptfunktionalität des Smart Meter Gateways besteht darin, die aus den einzelnen Zählern empfangenen Messwerte zu speichern und gemäß einem konfigurierten Regelwerk zu verarbeiten und die verarbeiteten Messwerte an berechtigte Empfänger zu versenden.

Gemäß Anlage III zu der technischen Richtlinie besitzt der Zähler eine sogenannte drahtlose LMN-Schnittstelle, deren Kommunikationsstruktur hier definiert ist. Ebenfalls ist aus Anlage IV zu der technischen Richtlinie eine Feinspezifikation für eine drahtgebundene LMN-Schnittstelle für den Zähler bekannt.

Bei der praktischen Umsetzung treten durch die drahtlose und die drahtgebundene LMN-Schnittstelle besondere Probleme bei der Adressvergabe auf. Grundsätzlich ist es bekannt, eine eindeutige Adressierung von Geräten in einem Netzwerk vorzunehmen, indem jedem Gerät eine weltweit eineindeutig feste Adresse zugeteilt oder mittels eines Verfahrens zur Adressvergabe eine Adresse dynamisch vergeben wird. Beispiele hierfür sind die Vergabe von festen eineindeutigen IPV6-Adressen oder die Vergabe von dynamischen nicht eineindeutigen IPV4-Adressen über das aus RFC2131 bekannte DHCP-Protokoll, bei dem eine Adresse auch für einzelne Netzabschnitte als gültig definiert sein kann. Die Verwaltung und Zuordnung der gültigen Adressen zu den Geräten erfolgt dabei über ein im Kommunikationsnetz befindliches Mastergerät.

Ein effizientes Verfahren zur dynamischen Adressvergabe bei einer vorab nicht bekannten Anzahl von Geräten in einem Netzwerk ist die Adressvergabe über das von L.G. Roberts beschriebenen Aloha-Verfahren, bei dem eine unkoordinierte Kommunikation in Zeitschlitzen erfolgt und dabei auftretende Kollisionen erkannt werden (vgl. L. G. Roberts: Aloha Package Systems with and without Slots and Capture, Band 5, Nr. 2, Computer Communications Review, April 1975, S. 28 - 42). Das Aloha-Verfahren wird in unzähligen Kommunikationsnetzen eingesetzt. Die Einfachheit und seine Verbreitung haben dazu geführt, dass die Adressvergabe für Geräte in der Regel zuverlässig über Zeitschlitze gelöst wird.

Bei der Entwicklung von auf Zeitschlitzen basierenden Adressvergaben müssen Entwickler die zulässigen Antwortzeiten festlegen und auf genaue Zeitmessung zwischen den Kommunikationsteilnehmern achten. In der Praxis führt dies regelmäßig dazu, dass Geräte, die kabelgebunden miteinander vernetzt werden können, aufgrund der geringen Latenzzeit in kabelgebundenen Netzen auch innerhalb geringer Zeitfenster miteinander kommunizieren, um gültige Adressierungen zu ermöglichen. Dabei erleichtern kurze Zeitfenster auch die Synchronisierung der Kommunikation, da die Genauigkeit der Zeitbestimmung in den Geräten mit der Größe der zulässigen Zeitfenster abnimmt. In kabelgebundenen Netzwerken funktioniert die Adressvergabe in der Regel zuverlässig und schnell.

Eine nachträgliche Nutzung von solchen Geräten in Kommunikationsnetzen mit großer Latenzzeit, wie beispielsweise Funknetzen, ist nicht möglich. Durch die hohe Latenzzeit wird eine rechtzeitige Antwort nicht erfolgen können, insbesondere dann, wenn das vorgegebene Zeitfenster für die Antwort kleiner als die Latenzzeit des Kommunikationsnetzes ist. Eine verspätete Antwort wird verworfen. In solchen Kommunikationsnetzen können Geräte daher nicht eingesetzt werden.

Nach der technischen Richtlinie BSI TR-03109-1 erfolgt die Vernetzung von Zählern mit dem Smart Meter Gateway für die drahtgebundene Vernetzung der Zähler bei der Adressvergabe mit Zeitschlitzen von 5 ms +/- 10 % (vgl. Technische Richtlinie BSI TR-03109-1, Anlage IV, Teil A: "HDLC für LMN-Schnittstelle", Kapitel 4). Eine Vernetzung der Zähler über ein leitungsgebundenes Kommunikationsnetz mit einer typischen Latenzzeit von 5 ms oder höher ist daher nicht möglich, da bereits die Adressvergabe der Geräte nicht in den hierfür vorgesehenen Zeitschlitzen gelingen kann. Für die drahtlose Kommunikation ist in der technischen Richtlinie ebenfalls ein Verfahren zur Adressvergabe vorgesehen, jedoch unterliegt dieses Verfahren anderen Einschränkungen und ist für ein gemischtes Kommunikationsnetz mit drahtlosem und leitungsgebundenem Datenaustausch nicht geeignet.

Aus praktischer Sicht ist es überaus wünschenswert, wenn nicht alle Zähler drahtgebunden mit einem Gateway verbunden sein müssen. In Hochhäusern, beispielsweise, die über ein Smart Meter Gateway verfügen, kann eine drahtgebundene Anbindung sämtlicher Zähler einen erheblichen Mehraufwand bei der Installation darstellen.

Aus US 2015/0084547 ist eine digital adressierbare Lichtschnittstelle (digitally adressable lighting interface (DALI)) bekannt geworden. Hierbei werden Sensorsignale von Geräten in dem Lichtnetzwerk sensiert und automatisch einer Schnittstellenkurzadresse zugewiesen. Um jedes Gerät eindeutig adressieren zu können, wird jedes neu detektierte Gerät global mit einer Adresse versehen.

Der Erfindung liegt die Aufgabe zugrunde, ein Verfahren zur Adressvergabe für eine Vielzahl von Zählern zur Verbrauchsmessung in einem Smart Meter Gateway bereitzustellen, das eine Adressvergabe über ein Funknetz ermöglicht. Ebenfalls liegt der Erfindung die Aufgabe zugrunde, die notwendige Hardware für eine Adressvergabe über ein Funknetz in Form eines Systems von Adaptern zur Verfügung zu stellen.

Erfindungsgemäß wird die Aufgabe durch ein Verfahren mit den Merkmalen aus Anspruch 1 und ein System von Adaptern mit den Merkmalen aus Anspruch 11 gelöst.

Das erfindungsgemäße Verfahren dient zur Adressvergabe für eine Vielzahl von Zählern zur Verbrauchsmessung an einem Gateway. Bei den Zählern zur Verbrauchsmessung handelt es sich gegenwärtig bevorzugt um LMN-Geräte gemäß BSI TR-03109-1 mit den entsprechend spezifizierten drahtlosen und drahtgebundenen Schnittstellen. Bei dem Gateway handelt es sich bevorzugt um ein Smart Meter Gateway gemäß BSI TR-03109-1, das zur drahtlosen und drahtgebundenen Kommunikation mit den LMN-Geräten ausgelegt ist. Zukünftige Zähler zur Verbrauchszählung und Smart Meter Gateways sind nicht ausgeschlossen, der Bezug auf die TR-03109-1 dient lediglich dem technischen Verständnis. Das Gateway ist dazu ausgebildet, um mit der Vielzahl von Zählern über eindeutige Adressen Daten bidirektional auszutauschen. Zur Adressvergabe ist vorgesehen, dass ein oder mehrere Zähler in einem drahtgebundenen Netzwerk mit einem oder mehreren Slave-Adaptern eine zeitbasierte Adressvergabe durchführen. Der oder die Slave-Adapter sind dazu ausgelegt, um mit den Zählern HDLC-Adressen zu vergeben und die entsprechende HDLC-Adressvergabe durchzuführen.

Ferner ist ein Master-Adapter vorgesehen, der mit dem Gateway über ein weiteres drahtgebundenes Netzwerk und mit dem oder den Slave-Adaptern über ein Funknetzwerk zu einem bidirektionalen Datenaustausch verbunden ist. Der Master-Adapter ist ausgebildet, um Adressen von dem oder den Slave-Adaptern zu empfangen und jeder der empfangenen Adressen eine nicht belegte Adresse des Gateways zuzuordnen.

Weiterhin führt das Gateway über das weitere drahtgebundene Netzwerk mit dem Master-Adapter eine zeitbasierte Adressvergabe, bevorzugt eine HDLC-Adressvergabe für die zugeordneten Adressen des Master-Adapters aus. Bei dem erfindungsgemäßen Verfahren zur Adressvergabe erfolgt eine bevorzugt nach der technischen Richtlinie BSI TR-03109-1 erfolgende zeitbasierte Adressvergabe zwischen den Zählern und dem Slave-Adapter. Ebenfalls erfolgt eine zeitbasierte Adressvergabe zwischen dem Gateway und dem Master-Adapter. Zwischen Slave-Adapter und Master-Adapter werden die Adressen der Zähler ausgetauscht, wobei der Master-Adapter den Adressen der Zähler nicht belegte Adressen des Gateways zuordnet. Das erfindungsgemäße Verfahren besitzt den Vorteil, dass eine Kombination von drahtloser und drahtgebundener Kommunikation für ein Smart Meter Gateway mit seinen Zählern möglich ist und dabei trotzdem mit den vorgegebenen Zeitschlitzen von 5 ms für die Adressvergabe gearbeitet werden kann.

In einer bevorzugten Weiterbildung des erfindungsgemäßen Verfahrens ist jedem der Slave-Adapter genau ein Master-Adapter zugeordnet. Die Zuordnung zwischen Slave-Adapter und Master-Adapter stellt sicher, dass nicht mehrere Master-Adapter für denselben Slave-Adapter zuständig sind und deren Daten verarbeiten. Bevorzugt kann das Verfahren auch mit mehreren Master-Adaptern und/oder mehreren Slave-Adaptern ausgeführt werden.

In einer bevorzugten Weiterführung des erfindungsgemäßen Verfahrens sind der Master-Adapter und/oder der/die Slave-Adapter ausgebildet, die Übertragungszeit bei dem Datenaustausch zu ermitteln. Die ermittelte Übertragungszeit wird bei dem Datenaustausch mit übertragen. Die Übertragungszeit setzt sich aus einer Verarbeitungszeit und einer Laufzeit zusammen. Die für den Datenaustausch ermittelte Übertragungszeit betrifft insbesondere die Übertragungszeit von dem Zähler zu dem Master-Adapter. In diesem Fall kann der Master-Adapter die Übertragungszeit ermitteln und beispielsweise an das Gateway weiterleiten. Ebenso ermittelt der Slave-Adapter die Übertragungszeit für Daten, die beispielsweise von dem Gateway über den Master-Adapter an einen Zähler geleitet werden. Für die Ermittlung der Zeit können unterschiedliche Verfahren eingesetzt werden. Beispielsweise kann, wie bei einem PING-Signal ein Testsignal zwischen Sender und Empfänger hin und hergeschickt werden und dessen Laufzeit durch zwei geteilt werden. Auch besteht die Möglichkeit einer inkrementellen Zeitmessung, bei der die in den einzelnen Stationen anfallenden Verarbeitungszeiten sowie die Laufzeiten zwischen den Stationen einzeln addiert werden. Grundsätzlich ist es möglich, die übermittelten Übertragungszeiten jeweils mit einzelnen Paketen oder Nachrichten gemeinsam zu übertragen. Alternativ können auch Durchschnittswerte für die Übertragungszeiten übermittelt werden. Bei der Adressvergabe für Zähler zur Verbrauchsmessung und bei dem auf dieser Adressvergabe basierenden Datenaustausch sind insbesondere für Messwerte die Zähler und deren Aktualität entscheidend. Mit Hilfe der ermittelten Übertragungszeit kann am Gateway beispielsweise entschieden werden, ob vorliegende Messwerte aktuelle Messwerte sind, die beispielsweise als Zählerstand ausgewertet und weiterverarbeitet werden können oder ob die vorliegenden Messwerte zu lange in der Zeit zurückliegen. Mit Hilfe der ermittelten Übertragungszeit kann beispielsweise der Zeitpunkt der Messung bestimmt werden, beispielsweise in dem die aktuelle und als gültig angenommene Uhrzeit des Smart Meter Gateways um die benötigte Übertragungszeit vermindert wird und somit der Zeitpunkt der Versendung der Messwerte im Zähler und nicht der Empfangszeitpunkt im Smart Meter Gateway festgehalten wird.

In dem erfindungsgemäßen Verfahren wird der Datenaustausch über das Funknetz gefiltert. Insbesondere bei der Verwendung eines Smart Meter Gateways und einer Vielzahl von Zählern erfolgt eine nicht unerhebliche Menge an Datenaustausch. Im Hinblick auf eine geringere Bandbreite eines Funknetzes gegenüber dem drahtgebundenen Netz kann hier eine zu große Datenmenge vorliegen, die mit Hilfe des Filters reduziert wird. Die Filterfunktion kann hierbei beispielsweise eine zeitliche Filterung der Kommunikation vornehmen, die dazu führt, dass Zähler nur in zeitlichen Abständen angesprochen werden können. Als Filterfunktion kann auch eine zahlenmäßige Reduktion der Nachrichten zwischen Zählern und dem Gateway vorgesehen sein, bei der beispielsweise nur jede n-te Nachricht eines Senders über das Funknetz übertragen wird.

Die Filterfunktion kann Nachrichten untergeordneter Protokollschichten, beispielsweise Nachrichten der auch für die Adressvergabe zuständigen HDLC-Schichten zurückhalten und solche Nachrichten eigenständig quittieren, beispielsweise mit hierfür vorgesehenen ReceiveReady- und / oder ReceiveNotReady-Nachrichten. Bevorzugt ist hier vorgesehen, dass nach dem Weiterleiten eines Signals die Filterfunktion durch Verwendung von ReceiveReady-Nachrichten ihre Empfangsbereitschaft anzeigt.

In einer bevorzugten Weiterführung des erfindungsgemäßen Verfahrens sind mit dem drahtgebundenen Netzwerk ein oder mehrere Zähler mit dem Gateway und dem Master-Adapter verbunden. Von dem Master-Adapter wird die Adresse der mit dem Gateway verbundenen Zähler gespeichert. Die Speicherung der Adressen der direkt mit dem Gateway verbundenen Zähler erlaubt es auch bei einer Netzwerktopologie, bei der ein oder mehrere Master-Adapter gemeinsam mit Zählern an dem Gateway verbunden sind, in einfacher Form eine zeitbasierte Adressvergabe durchzuführen.

Das erfindungsgemäße Verfahren sieht ebenfalls vor, dass eine Latenzzeit in dem Funknetz größer als eine kritische Zeit für die zeitbasierte Adressvergabe ist. Die kritische Zeit kann beispielsweise die Zeit sein, innerhalb der auf eine empfangene Adresse geantwortet werden muss.

In einer zweckmäßigen Ausgestaltung des erfindungsgemäßen Verfahrens erfolgt in dem drahtgebundenen Netz des Slave-Adapters die Adressvergabe mit den Zählern, indem ein sendender Zähler eine generierte Adresse an den Slave-Adapter sendet und der Slave-Adapter diese Adresse empfängt und mit nicht belegten Adressen vergleicht, wobei, wenn eine nicht belegte Adresse empfangen wurde, der Empfang für den sendenden Zähler bestätigt wird. Das beschriebene Verfahren entspricht einer zeitbasierten Adressvergabe, wenn der Empfang für den sendenden Zähler innerhalb einer vorbestimmten Zeitspanne gesendet werden muss.

In einer Weiterführung des erfindungsgemäßen Verfahrens empfängt der Master-Adapter von dem Gateway die bereits belegten Adressen und ordnet jeder der empfangenen Adressen des oder der Slave-Adapter eine noch nicht belegte Adresse zu. Alternativ kann der Master-Adapter auch von dem Gateway die nicht belegten Adressen empfangen und diese den empfangenen Adressen des oder der Slave-Adapter zuordnen. Technisch gesehen ordnet der Master-Adapter den Adressen aus dem Adressraum der Slave-Adapter Adressen im Adressraum des Gateways zu, wobei der Master-Adapter berücksichtigt, dass Adressen in dem Adressraum des Gateways bereits vergeben sein können.

In einer Weiterbildung des erfindungsgemäßen Verfahrens sendet der Master-Adapter eine zugeordnete Adresse an das Gateway und das Gateway empfängt diese Adresse und vergleicht sie mit seinen noch nicht belegten Adressen. Wenn eine nicht belegte Adresse empfangen wurde, wird dem Master-Adapter der Empfang der Adresse bestätigt. Der Master-Adapter verhält sich bei der Adressvergabe, die drahtgebunden mit dem Gateway erfolgt, wie eine Menge von einzelnen Zählern, die gemeinsam mit dem Gateway kommunizieren.

In einer bevorzugten Ausgestaltung kann der Slave-Adapter zusätzlich auch eine eineindeutige Zähler-Identifikation (Zähler-ID) ermitteln und für eine Kommunikation mit dem Zähler beispielsweise durch einen Administrator bereitstellen. Die eineindeutige Zähler-ID wird dabei von dem Slave-Adapter wahlweise über den Master-Adapter oder unmittelbar für einen Monteur oder einen Administrator zur Verfügung bereitgestellt. Über die Zähler-ID ist es möglich, die verfügbaren Zähler eindeutig aus einem Weitverkehrsnetz (wide area network, WAN) zu identifizieren, um diese beispielsweise im Gateway administrativ vorzurichten. Der Administrator kann mit Hilfe ihm bekannter Einmalschlüssel für jeden Zähler gültige Profilkonfigurationen erstellen und in dem zugeordneten Gateway hinterlegen, so dass eine verschlüsselte Datenkommunikation zwischen dem Zähler und dem Gateway aufgenommen werden kann.

Die erfindungsgemäße Aufgabe wird ebenfalls durch ein System mit den Merkmalen aus Anspruch 11 gelöst.

Das erfindungsgemäße System besteht aus mindestens einem Master-Adapter und mindestens einem Slave-Adapter. Master-Adapter und Slave-Adapter sind zu einer bidirektionalen Datenkommunikation über ein Funknetzwerk ausgebildet. In dem erfindungsgemäßen System ist der Slave-Adapter ausgebildet, um mit mehreren Zählern zur Verbrauchsmessung Daten auszutauschen. Zudem ist der Slave-Adapter ausgebildet, über eine drahtgebundene Schnittstelle eindeutige Adressen in einer zeitbasierten Adressvergabe zu vergeben und um die Adressen zu speichern. Der Master-Adapter in dem erfindungsgemäßen System ist ausgebildet, um von einem oder mehreren Slave-Adaptern die gespeicherten Adressen zu empfangen und den empfangenen Adressen jeweils eine nicht belegte Adresse eines Gateways zuzuordnen, wobei das über eine drahtgebundene Schnittstelle mit dem Master-Adapter verbundene Gateway dafür ausgelegt ist, um in einer zeitbasierten Adressvergabe eindeutige Adressen für die zugeordneten Adressen des Master-Adapters zu vergeben. Die Adressvergabe von eindeutigen Adressen für die zugeordneten Adressen des Master-Adapters bedeutet, dass jeder Zähler, der mit dem Gateway verbunden ist, sei es über das erfindungsgemäße System aus Slave-Adapter und Master-Adapter, sei es in einer direkten drahtgebundenen Verbindung, eine eindeutige Adresse erhält. Gelegentlich werden eindeutige Adressen auch als eineindeutige Adressen bezeichnet, wobei dies zur Ausdruck bringt, dass jedem Gerät genau eine Adresse und jeder Adresse genau ein Gerät zugeordnet ist.

Das erfindungsgemäße System aus mindestens einem Master-Adapter und mindestens einem Slave-Adapter erlaubt es, in ein bestehendes Netzwerk mit einem Gateway und mehreren Zählern Strecken für den Datenaustausch über ein Funknetzwerk einzurichten. Der kritische Aspekt an dem Funknetzwerk, eine zeitbasierte Adressvergabe durchzuführen, wird mit Kommunikation über den Master-Adapter und den Slave-Adapter gelöst.

In einer Ausgestaltung des Systems sind mehrere Master-Adapter und mehrere Slave-Adapter vorgesehen. Jeder der Slave-Adapter ist genau einem Master-Adapter zugeordnet, wobei die mehreren Master-Adapter Daten von nicht ihnen zugeordneten Slave-Adaptern empfangen können und an mindestens einen anderen Master-Adapter weiterleiten. Das Weiterleiten der empfangenen Daten erfolgt dabei drahtgebunden oder auch über ein Funknetz. Die Zuordnung der Slave-Adapter zu den Master-Adaptern stellt sicher, dass es nicht zu einer doppelten Zuordnung der Zähler kommt. Da je nach räumlicher Anordnung von Master-Adapter und Slave-Adaptern die Situation auftreten kann, dass in dem Funknetz ein anderer Master-Adapter ein besseres Datensignal als der zugeordnete Master-Adapter empfängt, wird eine sichere Datenübertragung erreicht, indem jeder Master-Adapter das Signal empfängt und dann drahtgebunden an andere Master-Adapter weiterleitet.

Die eineindeutige Zähler-Identifikation kann hierbei dazu verwendet werden, in Systemen mit mehreren Master-Adaptern und mehreren Slave-Adaptern die Zuordnung der Zähler zu den jeweiligen Master-Adaptern zu festzulegen. Dies kann fest in den Master-Adaptern hinterlegt werden oder in einer weiteren Ausgestaltung mittels einer Koordinationsinstanz vorgenommen werden. Der Master-Adapter empfängt Nachrichten des Slave-Adapters einschließlich der Zähler-Identifikation und kann nun mithilfe der Zähler-Identifikation bei der Koordinationsinstanz abfragen, welchem Master-Adapter der Zähler zugeordnet ist. In Abhängigkeit der Abfrage übermittelt der Master-Adapter die Nachricht an das mit ihm direkt verbundene Gateway weiter oder sofern die Nachricht für einen anderen Master-Adapter vorgesehen ist an den anderen von der Koordinierungsinstanz bestimmten Master-Adapter weiter, so dass dieser die Nachricht an Gateway weiterleiten kann.

Es ist ferner möglich, dass der Master-Adapter auch für Nachrichten von einem Gateway an einen Zähler die Route zum zugeordneten Slave-Adapter mithilfe der Zähler-Identifikation von der Koordinierungsinstanz abfragt.

In einer bevorzugten Ausgestaltung des Systems ist ein Zeitnehmer vorgesehen. Der Zeitnehmer kann beispielsweise dem Slave-Adapter, dem Master-Adapter oder auch dem Gateway zugeordnet sein. Der Zeitnehmer kann auch jeder Systemkomponente zugeordnet sein, die Daten, insbesondere Messwerte, empfängt, weiterleitet, verarbeitet oder auswählt. Der Zeitnehmer ermittelt eine Übertragungszeit bei dem Datenaustausch und überträgt diese bei dem Datenaustausch mit. Der Zeitnehmer kann dabei einzelne, bei der Übertragung der Daten anfallende Übertragungszeiten berücksichtigen. Eine Übertragungszeit umfasst hierbei eine reine Laufzeit zwischen Sender und Empfänger, ebenso wie eine Verarbeitungszeit der empfangenen Daten, bevor diese gesendet oder weitergeleitet werden.

In der Ausbildung des Systems sind Master-Adapter und Slave-Adapter mit einer vorbestimmten Filterfunktion ausgestattet, mit deren Hilfe beispielsweise die Menge der übertragenen Daten reduziert werden kann. Auch kann mit der Filterfunktion für die zu übertragenden Daten beispielsweise ein Jitter in den übertragenen Daten vermieden werden, indem die Datenübertragung mit einem festen Zeittakt verzögert erfolgt.

In einer zweckmäßigen Ausgestaltung besitzt der Master-Adapter einen Adressspeicher, in dem von dem Gateway bereits belegte Adressen gespeichert sind. Selbstverständlich können in dem Adressspeicher auch beispielsweise die nicht belegten Adressen gespeichert sein.

In einer bevorzugten Ausgestaltung des Systems ist mindestens ein Zähler ausgelegt, um ansprechend auf ein Rundrufsignal zur Adressvergabe des Slave-Adapters eine Adresse zu senden, wobei der Slave-Adapter ausgelegt ist, um die empfangene Adresse mit nicht belegten Adressen zu vergleichen und dem sendenden Zähler die Adresse zu bestätigen, wenn diese noch nicht belegt ist. Zeitkritisch ist diese Adressvergabe, wenn innerhalb einer vorbestimmten Zeitspanne auf die empfangene Adresse zu antworten ist.

Eine zweckmäßige Weiterbildung des Systems sieht vor, dass der Master-Adapter ansprechend auf ein Rundrufsignal zur Adressvergabe des Gateways einzeln mit den zugeordneten Adressen antwortet, so als würden die Zähler jeweils einzeln auf das Rundrufsignal antworten.

In einer bevorzugten Ausgestaltung des Systems weist jeder der Zähler mindestens eine eineindeutige Zähler-Identifikation auf, die über das Gateway weitergeleitet werden kann. Hierdurch ist es möglich, bei einer Installation von Zählern für einen Monteur oder bei einer Erstübertragung den Zähler eindeutig anzusprechen. Vor einer Erstübertragung kann so beispielsweise ein gültiges Profil für den Zähler erstellt und im Gateway konfiguriert werden.

Eine bevorzugte Ausgestaltung der Erfindung wird nachfolgend erläutert. Es zeigen:
- Fig. 1: den grundsätzlichen Aufbau eines Smart Meter Gateways und seine Möglichkeiten der Kommunikation,
- Fig. 2: ein Beispiel für eine HDLC-Adressvergabe an einem Smart Meter Gateway mit drei LMN-Teilnehmern,
- Fig. 3: den schematischen Aufbau mit einem Smart Meter Gateway, einer Vielzahl von Zählern und mehreren Adaptern und
- Fig. 4: einen schematischen Aufbau entsprechend Fig. 3 mit mehreren Master-Adaptern und einer Koordinierungsinstanz.

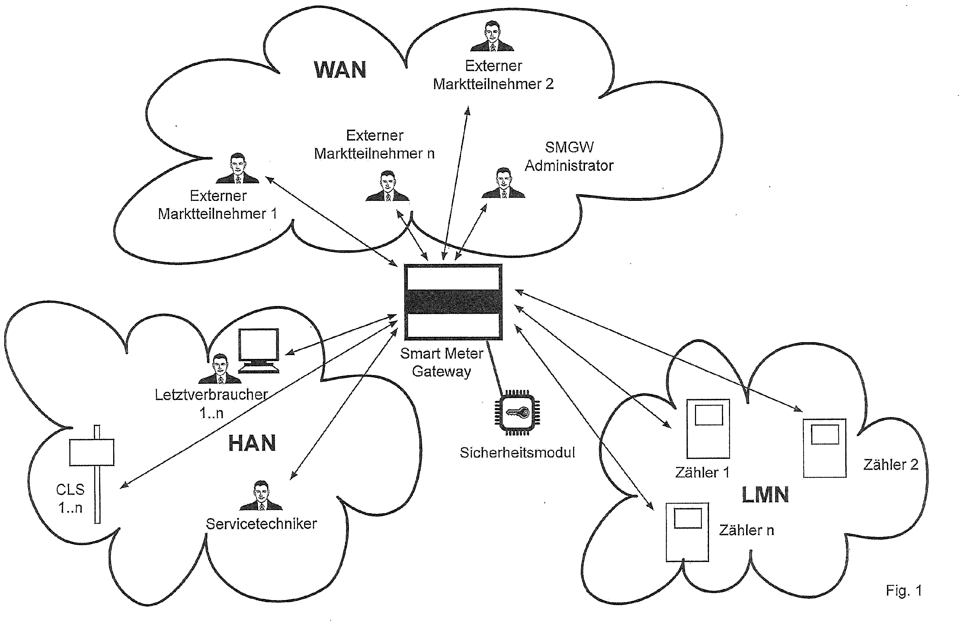

Fig. 1 zeigt die Funktionalität des Smart Meter Gateways (kurz auch: Gateway) 10, wie sie in der technischen Richtlinie BSI TR-03109-1 definiert ist. Um einen transparenten und nachvollziehbaren Verbrauch sicherzustellen, ist eine Vielzahl von Zählern zu einem lokalen metrologischen Netz (local metrological network, LMN) zusammengefasst. Die in dem LMN zusammengeschlossenen Zähler kommunizieren mit dem Smart Meter Gateway zu den von den Zählern gemessenen Größen. Die gemessenen Größen können Stoff- und Energiemengen, beispielsweise von Strom, Gas, Wasser und Wärme, betreffen. Neben reinen Mengenangaben können die Zähler auch weitere messtechnisch wichtige Größen, wie beispielsweise Frequenz- und Phasenlage umfassen.

Eine weitere Funktionalität des Gateways besteht in der Kommunikation über das Weitverkehrnetz (wide area network, WAN). Über das WAN können externe Marktteilnehmer, wie beispielsweise Energieversorgungsunternehmen, auf das Gateway und die Daten der Zähler zugreifen. Über das WAN kann auch der Gateway-Administrator im Zuge der Fernwartung auf das Gateway zugreifen. Als dritten Kommunikationsbereich für das Gateway kann das Heimnetz (home area network, HAN) identifiziert werden. Innerhalb des HAN kommuniziert das Gateway mit steuerbaren Energieverbrauchern und steuerbaren Energieerzeugern, wie beispielsweise intelligente Haushaltsgeräte, Kraftwärmekopplungen oder Photovoltaik-Anlagen, Stromunterbrecher (controlable local systems, CLS). Im Rahmen des Heimnetzwerks HAN kann auch der Endverbraucher mit dem Smart Meter Gateway kommunizieren, um auf dessen Daten zurückgreifen zu können. Auch der Servicetechniker hat über das HAN einen Zugriff auf das Gateway.

Im Rahmen des lokalen metrologischen Netzes erfolgt eine zeitschlitzbasierte Adressvergabe. Wie in der Anlage IV zur technische Richtlinie in der Feinspezifikation drahtgebundene LMN-Schnittstelle, Teil A: HDLC für LMN erläutert wird, sendet das Smart Meter Gateway zur Erkennung neuer Zähler periodisch ein Rundrufsignal (HDLC-Broadcast) aus. Der Inhalt des Rundrufsignals fordert Zähler dazu auf, sich selbst eine neue Adresse zu geben. Das Rundrufsignal ist dabei derart formuliert, dass die Aufforderung an alle jene Zähler gerichtet ist, die dem Gateway nicht bekannt sind.

Die angesprochenen Zähler antworten innerhalb von Zeitschlitzen. Dabei wird der für die Antwort zu benutzende Zeitschlitz zufällig bestimmt, wobei zwischen zwei Zeitschlitzen eine Sicherheitszeit (guard time) vorgesehen ist, während der keiner der Zähler antworten darf. Im Anschluss an die Sicherheitszeit folgt das Zeitfenster, innerhalb dessen die Versendung der Antwort zu versenden ist. Sicherheitszeit und Zeitfenster für die Antwort besitzen jeweils eine Dauer von 5 ms +/- 10 %.

Ergebnis dieses Sende- und Bestätigungsvorgangs ist es, dass es zu Kollisionen bei den Antworten und zur Auswahl identischer Adressen durch mehrere Zähler kommt. Es kommt aber auch zur Erfassung neuer, dem Gateway bis dahin unbekannter Zähler. Der Vorgang wird periodisch wiederholt, wobei die Anzahl der Zähler klein im Vergleich zu den möglichen Geräten aus dem Adressraum ist und das Gateway nach kurzer Zeitspanne alle Zähler kennen wird.

Als weiterer Bestandteil in der Richtlinie ist vorgesehen, dass Zähler nur mit einem Gateway kommunizieren können, wenn der Zähler über ein in dem Gateway hinterlegtes Zählerprofil verfügt. Das Zählerprofil umfasst u. a. eine eineindeutige Zähler-ID und einen zählerspezifischen Initialschlüssel, der zum Aufbau verschlüsselter Verbindungen zwischen Zähler und dem zugeordneten Gateway genutzt werden kann.

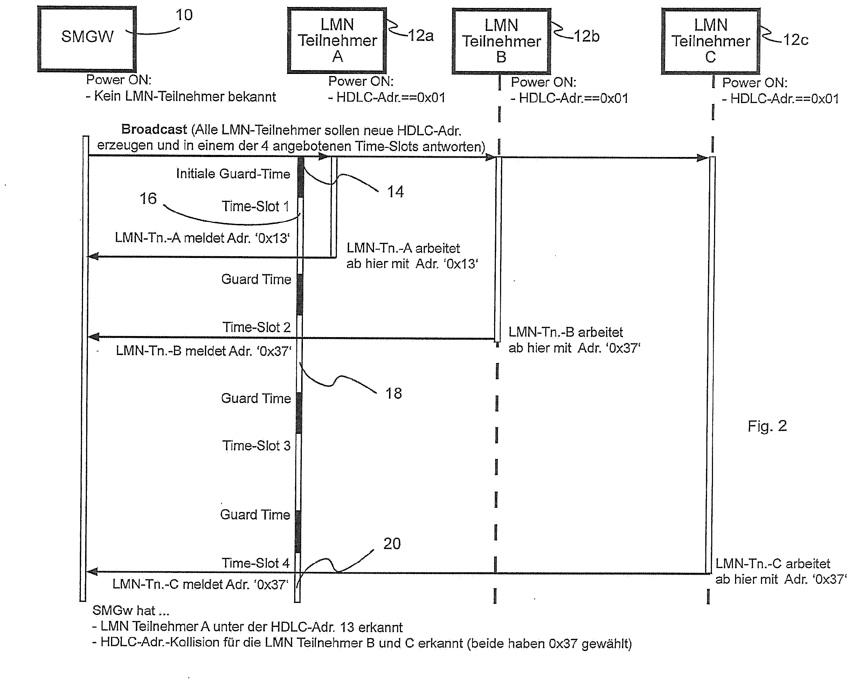

Fig. 2 beschreibt beispielhaft die Adressvergabe näher. Das Gateway 10 befindet sich nach seinem Einschalten in einem nicht verbundenen Zustand, in dem keine Zähler bekannt sind. Das Gateway 10 setzt ein Rundrufsignal ab, das von den Zählern 12a, 12b, 12c empfangen wird. Der Zähler 12a sendet nach einer anfänglichen Totzeit 14 im ersten Zeitschlitz 16 seine Adresse 0x13. Das Gateway 10 erkennt den Zähler 12a unter der Adresse 0x13 und schickt seine Antwort an den Zähler 12a. In dem zweiten Zeitfenster 18 sendet der Zähler 12b seine Adresse 0x37.

Der Zähler 12c sendet im vierten Zeitfenster 20 ebenfalls die Adresse 0x37, so dass für das Gateway eine Adresskollision hinsichtlich der Adresse 0x37 der Zähler 12b und 12c vorliegt. Als Ergebnis des in Fig. 2 beschriebenen Vorgangs wird also dem Zähler 12a die Adresse 0x13 zugeordnet. Bei einem späteren Rundrufsignal wird das Gateway alle Zähler bis auf den Zähler 12a auffordern, sich mit ihrer Adresse anzumelden.

Der in Fig. 2 beschriebene Vorgang der HDLC-Adressvergabe bezieht sich auf die drahtgebunden Schnittstelle der Zähler.

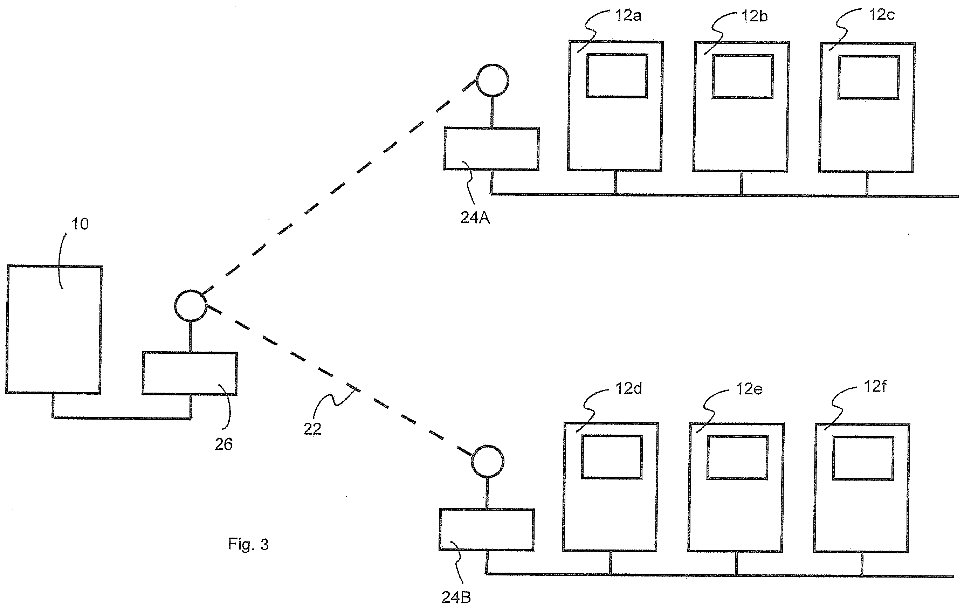

Fig. 3 zeigt in einer schematischen Ansicht die Verwendung eines Funknetzwerks 22 zwischen zwei Slave-Adaptern 24a, 24b und einem Master-Adapter 26. Die Zähler 12a, 12b und 12c sind drahtgebunden mit dem Slave-Adapter 24a gekoppelt. Die Zähler 12d, 12e und 12f sind mit dem Slave-Adapter 24b gekoppelt. Jeder der Slave-Adapter 24a und 24b ist ausgebildet, um eine HDLC-Adressvergabe, wie sie beispielhaft in Fig. 2 dargestellt ist, durchzuführen. Nach einigen Durchläufen des Rundrufsignals von den Slave-Adaptern 24a und 24b liegt eine eineindeutige Adressvergabe vor. Die Adressvergabe kann, da die Zähler drahtgebunden mit den Slave-Adaptern verbunden sind, mit den bekannten Größen von 5ms +/- 10 % für die Zeitfenster durchgeführt werden.

Die beiden Slave-Adapter 24a und 24b sind dem Master-Adapter 26 zugeordnet. Die von den Slave-Adaptern vergebenen Adressen werden über das Funknetz 22 an den Master-Adapter 26 übertragen. Der Master-Adapter 26 kennt die noch nicht vergebenen Adressen des Gateways und kann den empfangenen Adressen der Slave-Adapter die entsprechenden Adressen für das Gateway 10 zuordnen.

Der Vorgang sei an einem einfach zu überschauenden Beispiel noch einmal tabellarisch zusammengefasst:

| **SA_A** | **SA_B** | **MA** | **GW** |
|---|---|---|---|
| 1 | 1 | A1 | C1 |
| 2 | 2 | A2 | C2 |
| 3 | 3 | A3 | C4 |
| | | B1 | C5 |
| | | B2 | C6 |
| | | B3 | C7 |
| | | | C3 schon bekannt |

Es sei angenommen, am Gateway GW sei bereits die Adresse C3 vergeben. Die Tabelle sagt nun aus, dass am Slave-Adapter SA_A für die Zähler 12a, 12b und 12c die Adressen 1, 2, 3 vergeben sind. Der Slave-Adapter SA_B vergibt für die Zähler 12d, 12e und 12f beispielsweise ebenfalls die Adressen 1, 2, 3. Beide Slave-Adapter übertragen ihre Adressen an den Master-Adapter MA, der diese aufgrund der Adresse der Slave-Adapter eindeutig unterscheiden kann und dem die Adressen A1, A2, A3 sowie B1, B2, B3 vorliegen. Es sei nun angenommen, dass in dem Master-Adapter 26 die Information vorliegt, dass am Gateway GW bereits die Adresse C3 belegt ist. Dann ordnet der Master-Adapter den Adressen A1 bis B3 die Werte C1, C2 und C4 bis C7 zu.

Der besondere Reiz der vorliegenden Erfindung besteht darin, dass nicht nur zwischen Slave-Adaptern und Zählern bereits auf das bekannte Adressvergabeverfahren zurückgegriffen werden kann, sondern auch vom Master-Adapter für die Zuordnung zu den Adressen in dem Gateway auf das bekannte Adressvergabeverfahren zurückgegriffen werden kann. Der Master-Adapter 26 verhält sich dabei so, als würden die Zähler A1 bis B3 direkt an das Gateway antworten, so als wären sie drahtgebunden mit dem Gateway verbundene Zähler.

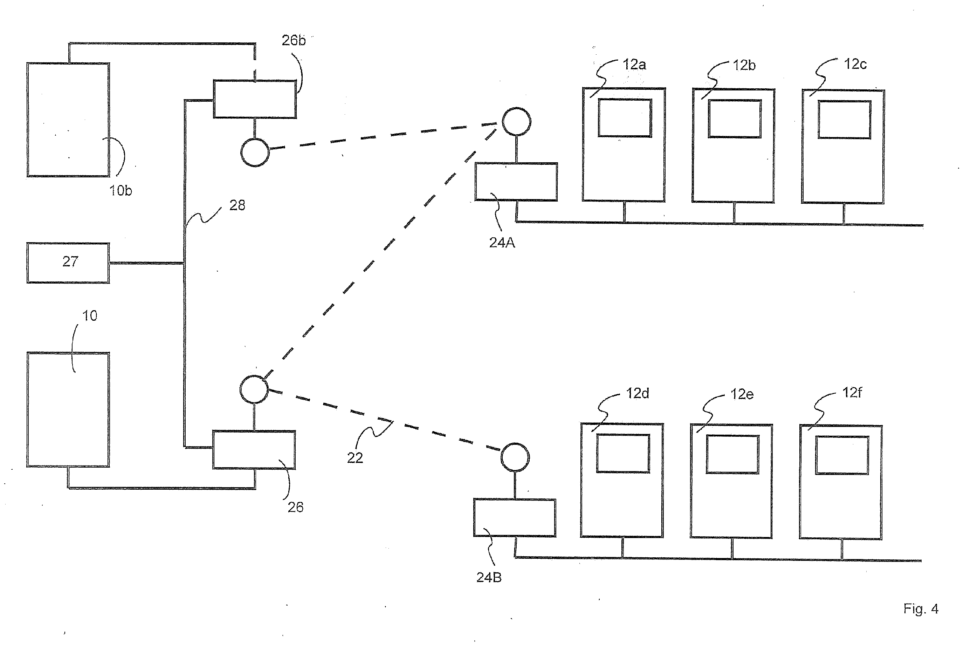

Fig. 4 zeigt eine schematische Darstellung entsprechend Fig. 3, bei der mehrere Master-Adapter 26, 26b über das Funknetzwerk 22 mit den Slave-Adaptern 24A, 24B verbunden sind. Die Master-Adapter 26, 26b sind über eine Datenverbindung 28 untereinander und mit einer Koordinierungsinstanz 27 verbunden. Jeder der Master-Adapter 26, 26b ist zudem mit seinem Gateway 10, 10b verbunden.

Die Koordinierungsinstanz kennt eine Zuordnung zwischen den Zählern 12a - 12f und den zugehörigen Master-Adaptern 26 und 26b. Diese Zuordnung kann über eine Zähler-Identifikation erfolgen. Empfangene Nachrichten, die von einem Zähler stammen, der nicht dem empfangenen Master-Adapter zugeordnet ist, können über die Koordinierungsinstanz 27 dem entsprechenden Master-Adapter zugeordnet werden. Die Master-Adapter 26, 26b tauschen die Nachrichten entsprechend über die Datenverbindung 28 miteinander aus, so dass jeder Master-Adapter die Nachrichten seiner ihm zugeordneten Zähler verarbeitet und an sein Gateway weiterleitet.

## Patentansprüche

1. Verfahren zur Adressvergabe für eine Vielzahl von Zählern (12a-f) zur Verbrauchsmessung an einem Gateway (10), das ausgebildet ist, um mit der Vielzahl von Zählern (12a-f) über eindeutige Adressen Daten bidirektional auszutauschen, wobei ein oder mehrere Zähler (12a-c; 12d-f) über ein drahtgebundenes Netzwerk mit jeweils einem Slave-Adapter (24 A, B) eine zeitbasierte Adressvergabe durchführen,
**dadurch gekennzeichnet, dass**
- ein oder mehrere Slave-Adapter (24 A, B) vorgesehen sind, wobei jeder Slave-Adapter mit einem anderen drahtgebundenen Netzwerk verbunden ist und jeder Zähler genau einem drahtgebundenen Netzwerk und einem Slave-Adapter zugeordnet ist,
- ein Master-Adapter (26) mit dem Gateway (10) über ein weiteres drahtgebundenes Netzwerk und mit dem einen oder mehreren Slave-Adaptern (24A,B) über ein Funknetzwerk (22) zu einem bidirektionalen Datenaustausch verbunden ist, wobei der Slave-Adapter (24 A, B) eine vorbestimmte Filterfunktion aufweist und seinen Datenaustausch mit dem Master-Adapter anhand der Filterfunktion reduziert, wobei der Master-Adapter (26) ausgebildet ist, um die Adressen von dem oder mehreren Slave-Adaptern (24 A, B) zu empfangen und jeder der empfangenen Adressen eine nicht belegte Adresse des Gateways (10) zuzuordnen,
- das Gateway (10) über das weitere drahtgebundene Netzwerk mit dem Master-Adapter (26) eine zeitbasierte Adressvergabe für die zugeordneten Adressen des Master-Adapters (26) ausführt und
- ein sendender Zähler eine generierte Adresse an den Slave-Adapter (24 A, B) sendet und der Slave-Adapter (24 A, B) diese Adresse empfängt und mit nicht belegten Adressen vergleicht, wobei, wenn eine nicht belegte Adresse empfangen wurde, der Empfang für den sendenden Zähler bestätigt wird.

2. Verfahren nach Anspruch 1, **dadurch gekennzeichnet, dass** jedem der Slave-Adapter (24 A, B) genau ein Master-Adapter (26) zugeordnet ist.

3. Verfahren nach Anspruch 1 oder 2, **dadurch gekennzeichnet, dass** der Master-Adapter (26) und/oder der oder die Slave-Adapter (24 A, B) die Übertragungszeit bei dem Datenaustausch ermittelt und die ermittelte Übertragungszeit bei dem Datenaustausch mit übertragen wird.

4. Verfahren nach einem der Ansprüche 1 bis 3, **dadurch gekennzeichnet, dass** in dem weiteren drahtgebundenen Netzwerk ein oder mehrere Zähler mit dem Gateway (10) und dem Master-Adapter (26) verbunden sind, wobei der Master-Adapter (26) die Adressen dieser Zähler als belegt speichert.

5. Verfahren nach einem der Ansprüche 1 bis 4, **dadurch gekennzeichnet, dass** der Master-Adapter (26) von dem Gateway (10) die bereits belegten Adressen empfängt und jeder der empfangenen Adressen des Slave-Adapters (24 A, B) eine noch nicht belegte Adresse zuordnet.

6. Verfahren nach einem der Ansprüche 1 bis 5, **dadurch gekennzeichnet, dass** der Master-Adapter (26) eine zugeordnete Adresse an das Gateway (10) sendet und das Gateway (10) diese Adresse empfängt und mit seinen nicht belegten Adressen vergleicht, wobei, wenn eine nicht belegte Adresse empfangen wurde, der Empfang für den sendenden Master-Adapter (26) bestätigt wird.

7. Verfahren nach einem der Ansprüche 1 bis 6, **dadurch gekennzeichnet, dass** der Slave-Adapter (24 A, B) zusätzlich eine eineindeutige Zähler-Identifikation ermittelt und die ermittelte Zähler-Identifikation für eine Einrichtung des Zählers bereitstellt.

8. Verfahren nach einem der vorstehenden Ansprüche, **dadurch gekennzeichnet, dass** mehrere Master-Adapter (26) miteinander verbunden sind und empfangene Nachrichten von einem der Zähler an denjenigen Master-Adapter (26) weitergeleitet werden, der dem Zähler zugeordnet ist.

9. Verfahren nach Anspruch 8, **dadurch gekennzeichnet, dass** eine Koordinierungsinstanz vorgesehen ist, die eine Zuordnung zwischen Zählern und Master-Adaptern (26) über die Zähler-Identifikation vornimmt und für das Weiterleiten von empfangenen Nachrichten zwischen den Master-Adaptern (26) zur Verfügung stellt.

10. System, bestehend aus mindestens einem Master-Adapter (26) und mindestens einem Slave-Adapter (24 A, B), die zu einer bidirektionalen Datenkommunikation über ein Funknetzwerk (22) ausgebildet sind, sowie einem Gateway (10), **dadurch gekennzeichnet, dass** der mindestens eine Slave-Adapter (24 A, B) eine vorbestimmte Filterfunktion aufweist und dazu ausgebildet ist, seinen Datenaustausch anhand der Filterfunktion zu reduzieren und um mit mehreren Zählern zur Verbrauchsmessung Daten auszutauschen und über eine drahtgebundene Schnittstelle eindeutige Adressen in einer zeitbasierten Adressenvergabe zu vergeben und die Adressen zu speichern, und der Master-Adapter (26) dazu ausgebildet ist, um von einem oder mehreren Slave-Adaptern (24 A; B) die gespeicherten Adressen zu empfangen und den empfangenen Adressen jeweils eine nicht belegte Adresse des Gateways (10) zuzuordnen, wobei das über eine drahtgebundene Schnittstelle mit dem Master-Adapter (26) verbundene Gateway dafür ausgelegt ist, um in einer zeitbasierten Adressvergabe eindeutige Adressen für die zugeordneten Adressen des Master-Adapters (26) zu vergeben, und ein sendender Zähler dazu ausgebildet ist, eine generierte Adresse an den Slave-Adapter (24 A, B) zu senden und der Slave-Adapter (24 A, B) dazu ausgebildet ist, diese Adresse zu empfangen und mit nicht belegten Adressen zu vergleichen, wobei der Slave-Adapter (24 A, B) dazu ausgebildet ist, wenn eine nicht belegte Adresse empfangen wurde, den Empfang für den sendenden Zähler zu bestätigen.

11. System nach Anspruch 10, **dadurch gekennzeichnet, dass** mehrere Master-Adapter (26) und mehrere Slave-Adapter (24 A; B) vorgesehen sind und jeder Slave-Adapter genau einem Master-Adapter (26) zugeordnet ist, wobei die mehreren Master-Adapter (26) dazu ausgebildet sind, Daten von nicht ihnen zugeordneten Slave-Adapter (24 A; B) zu empfangen und an mindestens einen anderen Master-Adapter (26) weiterzuleiten.

12. System nach Anspruch 11, **dadurch gekennzeichnet, dass** eine Koordinierungsinstanz dazu ausgebildet ist, eine Zuordnung zwischen Zählern und Master-Adaptern (26) über die Zähler-Identifikation vorzunehmen und für das Weiterleiten von empfangenen Nachrichten zwischen den Master-Adaptern (26) zur Verfügung zu stehen.

13. System nach Anspruch 10 oder 12, **dadurch gekennzeichnet, dass** ein Zeitnehmer dazu ausgebildet ist, eine Übertragungszeit bei dem Datenaustausch zu ermitteln und zu übertragen.

14. System nach einem der Ansprüche 10 bis 13, **dadurch gekennzeichnet, dass** der Master-Adapter (26) einen Adressspeicher aufweist, der dazu ausgebildet ist von dem Gateway (10) bereits belegte Adressen in dem Adressspeicher zu speichern.

15. System nach einem der Ansprüche 10 bis 14, **dadurch gekennzeichnet, dass** mindestens ein Zähler dazu ausgebildet ist, um ansprechend auf ein Rundrufsignal zur Adressvergabe des Slave-Adapters (24 A, B) eine Adresse zu senden und der Slave-Adapter dazu ausgebildet ist, um die empfangene Adresse mit nicht belegten Adressen zu vergleichen und dem sendenden Zähler die Adresse zu bestätigen, wenn diese noch nicht belegt ist.

16. System nach einem der Ansprüche 10 bis 15, **dadurch gekennzeichnet, dass** der Master-Adapter (26) dazu ausgebildet ist, ansprechend auf ein Rundrufsignal zur Adressvergabe des Gateways (10) einzeln mit den zugeordneten Adressen zu antworten, so als würden die Zähler jeweils einzeln auf das Rundrufsignal antworten.

17. System nach einem der Ansprüche 10 bis 16, **dadurch gekennzeichnet, dass** jeder der Zähler zusätzlich eine eineindeutige Zähler-Identifikation aufweist und einer der Slave-Adapter (24 A, B) dazu ausgebildet ist, die Zähler-Identifikation für einen Datenaustausch mit dem Zähler bereitzustellen.

## Claims

1. Method for address allocation for a plurality of meters (12a-f) for consumption measurement at a gateway (10) which is designed for bidirectionally exchanging data with the plurality of meters (12a-f) via unique addresses, wherein one or more meters (12a-c; 12d-f) carry out time-based address allocation via a wired network each having a slave adapter (24 A, B),
**characterised in that**
- one or more slave adapters (24 A, B) are provided, each slave adapter being connected to a different wired network and each meter being associated with exactly one wired network and one slave adapter,
- a master adapter (26) is connected to the gateway (10) via a further wired network and to the one or more slave adapters (24A,B) via a radio network (22) for bidirectional data exchange, wherein the slave adapter (24A, B) has a predetermined filter function and reduces its data exchange with the master adapter based on the filter function, wherein the master adapter (26) is adapted to receive the addresses from the one or more slave adapters (24 A, B) and to assign an unoccupied address of the gateway (10) to each of the received addresses,
- the gateway (10) performs time-based address allocation for the assigned addresses of the master adapter (26) via the further wired network with the master adapter (26), and
- a transmitting meter sends a generated address to the slave adapter (24 A, B) and the slave adapter (24 A, B) receives that address and compares it with unoccupied addresses, wherein, if an unoccupied address has been received, receipt for the transmitting meter is acknowledged.

2. Method according to claim 1, **characterized in that** exactly one master adapter (26) is assigned to each of the slave adapters (24 A, B).

3. Method according to claim 1 or 2, **characterized in that** the master adapter (26) and/or the slave adapter or slave adapters (24A, b) determine the transmission time during the data exchange and the determined transmission time is also transmitted during the data exchange.

4. Method according to one of claims 1 to 3, **characterized in that** in the further wired network one or more meters are connected to the gateway (10) and the master adapter (26), the master adapter (26) storing the addresses of these meters as occupied.

5. Method according to one of claims 1 to 4, **characterized in that** the master adapter (26) receives the currently occupied addresses from the gateway (10) and assigns to each of the received addresses of the slave adapter (24 A, B) an address not yet occupied.

6. A method according to any of claims 1 to 5, **characterised in that** the master adapter (26) sends an associated address to the gateway (10) and the gateway (10) receives that address and compares it with its unoccupied addresses, wherein, if an unoccupied address has been received, receipt for the sending master adapter (26) is acknowledged.

7. Method according to one of the claims 1 to 6, **characterized in that** the slave adapter (24 A, B) additionally determines a unique meter identification and makes the determined meter identification available for a device of the meter.

8. Method according to one of the above claims, **characterized in that** a plurality of master adapters (26) are interconnected and received messages are forwarded from one of the meters to that master adapter (26) which is assigned to the meter.

9. Method according to claim 8, **characterized in that** a coordination instance is provided which makes an assignment between meters and master adapters (26) via the meter identification and makes it available for forwarding received messages between the master adapters (26).

10. System comprising at least one master adapter (26) and at least one slave adapter (24 A, B) which are configured for bidirectional data communication via a radio network (22), and a gateway (10), **characterized in that** the at least one slave adapter (24 A, B) has a predetermined filter function and is configured to reduce its data exchange using the filter function and to exchange data with a plurality of meters for consumption measurement and to allocate unique addresses in time-based address allocation via a wired interface and to store the addresses, and the master adapter (26) is adapted to receive data from one or more slave adapters (24A; B) receiving the stored addresses and assigning an unoccupied address of the gateway (10) to each of the received addresses, the gateway connected to the master adapter (26) via a wired interface being designed to assign unique addresses for the assigned addresses of the master adapter (26) in a time-based address assignment, and a transmitting meter is adapted to transmit a generated address to the slave adapter (24 A, B) and the slave adapter (24 A, B) is adapted to receive that address and compare it with unoccupied addresses, the slave adapter (24 A, B) being adapted, if an unoccupied address has been received, to acknowledge receipt for the transmitting meter.

11. A system according to claim 10, **characterized in that** a plurality of master adapters (26) and a plurality of slave adapters (24 A; B) are provided and each slave adapter is associated with exactly one master adapter (26), the plurality of master adapters (26) being adapted to receive data from unassociated slave adapters (24 A; B) and to forward it to at least one other master adapter (26).

12. System according to claim 11, **characterized in that** a coordination instance is designed to make an assignment between meters and master adapters (26) via the meter identification and to be available for forwarding received messages between the master adapters (26).

13. System according to claim 10 or 12, **characterized in that** a timekeeper is designed to determine and transmit a transmission time during the data exchange.

14. System according to one of the claims 10 to 13, **characterized in that** the master adapter (26) has an address memory which is designed to store addresses already occupied by the gateway (10) in the address memory.

15. A system according to any one of claims 10 to 14, **characterised in that** at least one meter is configured to send an address in response to a broadcast signal for address allocation of the slave adapter (24 A, B) and the slave adapter is configured to compare the received address with unoccupied addresses and to acknowledge the address to the sending meter if it is not yet occupied.

16. A system according to any one of claims 10 to 15, **characterised in that** the master adapter (26) is adapted to respond in response to a broadcast signal for address allocation of the gateway (10) individually with the associated addresses as if the meters would each respond individually to the broadcast signal.

17. A system according to any one of claims 10 to 16, **characterised in that** each of the meters additionally comprises a unique meter identification and one of the slave adapters (24A, B) is adapted to provide the meter identification for data exchange with the meter.

## Revendications

1. Procédé d'attribution d'adresse pour une pluralité de compteurs (12a-f) pour le comptage au niveau d'une passerelle (10), laquelle est conçue pour échanger des données de façon bidirectionnelle avec la pluralité de compteurs (12a-f) par le biais d'adresses uniques, dans lequel un ou plusieurs compteurs (12a-c ; 12d-f) exécutent une attribution d'adresse basée sur le temps respectivement avec un adaptateur esclave (24A, B) par le biais d'un réseau filaire,
**caractérisé en ce que**
- il est prévu un ou plusieurs adaptateurs esclaves (24A, B), chaque adaptateur esclave (24A, B) étant relié à un autre réseau filaire et chaque compteur étant attribué exactement à un réseau filaire et un adaptateur esclave,
- un adaptateur maître (26) est relié à la passerelle (10) par le biais d'un autre réseau filaire et audit ou auxdits adaptateur(s) esclave(s) (24A, B) par le biais d'un réseau radio (22) pour un échange de données bidirectionnel, l'adaptateur esclave (24A, B) présentant une fonction de filtrage prédéterminée et réduisant son échange de données avec l'adaptateur maître à l'aide de la fonction de filtrage, l'adaptateur maître (26) étant conçu pour recevoir les adresses de l'adaptateur esclave (24A, B) ou de plusieurs de celui-ci, et pour attribuer une adresse non occupée de la passerelle (10) à chacune des adresses reçues,
- la passerelle (10) exécute une attribution d'adresse basée sur le temps par le biais de l'autre réseau filaire avec l'adaptateur maître (26) pour les adresses attribuées de l'adaptateur maître (26), et
- un compteur émetteur envoie une adresse générée à l'adaptateur esclave (24A, B) et l'adaptateur esclave (24A, B) reçoit cette adresse et la compare avec des adresses non occupées, sachant que lorsqu'une adresse non occupée a été reçue, la réception est confirmée pour le compteur émetteur.

2. Procédé selon la revendication 1, **caractérisé en ce qu'**exactement un adaptateur maître (26) est attribué à chacun des adaptateurs esclaves (24A, B).

3. Procédé selon la revendication 1 ou 2, **caractérisé en ce que** l'adaptateur maître (26) et/ou le ou les adaptateurs esclaves (24A, B) détecte/détectent le temps de transmission lors de l'échange de données et le temps de transmission détecté est transmis simultanément lors de l'échange de données.

4. Procédé selon l'une des revendications 1 à 3, **caractérisé en ce que** dans l'autre réseau filaire, un ou plusieurs compteurs sont reliés à la passerelle (10) et à l'adaptateur maître (26), l'adaptateur maître (26) enregistrant les adresses de ces compteurs comme étant occupées.

5. Procédé selon l'une des revendications 1 à 4, **caractérisé en ce que** l'adaptateur maître (26) reçoit les adresses déjà occupées à partir de la passerelle (10) et attribue une adresse pas encore occupée à chacune des adresses reçues de l'adaptateur esclave (24A, B).

6. Procédé selon l'une des revendications 1 à 5, **caractérisé en ce que** l'adaptateur maître (26) envoie une adresse attribuée à la passerelle (10) et la passerelle (10) reçoit cette adresse et la compare avec ses adresses non occupées, sachant que lorsqu'une adresse non occupée a été reçue, la réception est confirmée pour l'adaptateur maître (26) émetteur.

7. Procédé selon l'une des revendications 1 à 6, **caractérisé en ce que** l'adaptateur esclave (24A, B) détecte également une identification de compteur biunivoque et met à disposition l'identification de compteur détectée pour une installation du compteur.

8. Procédé selon l'une des revendications précédentes, **caractérisé en ce que** plusieurs adaptateurs maîtres (26) sont reliés entre eux et des messages reçus de l'un des compteurs sont transmis à l'adaptateur maître (26) attribué au compteur.

9. Procédé selon la revendication 8, **caractérisé en ce qu'**il est prévu une instance de coordination effectuant une attribution entre des compteurs et des adaptateurs maîtres (26) par le biais de l'identification de compteur, tout en étant disponible pour la transmission de messages reçus entre les adaptateurs maîtres (26).

10. Système comprenant au moins un adaptateur maître (26) et au moins un adaptateur esclave (24A, B), lesquels sont conçus pour une communication de données bidirectionnelle par le biais d'un réseau radio (22), ainsi qu'une passerelle (10), **caractérisé en ce que** l'au moins un adaptateur esclave (24A, B) présente une fonction de filtrage prédéterminée, tout en étant conçu pour réduire son échange de données à l'aide de la fonction de filtrage et pour échanger des données avec plusieurs compteurs pour le comptage et pour attribuer des adresses uniques lors d'une attribution d'adresse basée sur le temps par le biais d'une interface filaire et pour enregistrer les adresses, et l'adaptateur maître (26) étant conçu pour recevoir les adresses enregistrées à partir d'un ou de plusieurs adaptateurs esclaves (24A ; B) et pour attribuer respectivement une adresse non occupée de la passerelle (10) aux adresses reçues, la passerelle reliée à l'adaptateur maître (26) par le biais d'une interface filaire étant conçue pour attribuer des adresses uniques lors d'une attribution d'adresse basée sur le temps pour les adresses attribuées de l'adaptateur maître (26), et un compteur émetteur étant conçu pour envoyer une adresse générée à l'adaptateur esclave (24A, B), et l'adaptateur esclave (24A, B) étant conçu pour recevoir cette adresse et la comparer avec des adresses non occupées, l'adaptateur esclave (24A, B) étant conçu pour confirmer la réception pour le compteur émetteur lorsqu'une adresse non occupée a été reçue.

11. Système selon la revendication 10, **caractérisé en ce qu'**il est prévu plusieurs adaptateurs maîtres (26) et plusieurs adaptateurs esclaves (24A ; B), et chaque adaptateur esclave est attribué à exactement un adaptateur maître (26), les plusieurs adaptateurs maîtres (26) étant conçus pour recevoir des données d'adaptateurs esclaves (24A ; B) qui ne leur sont pas attribuées et pour transmettre celles-ci à l'un au moins parmi les autres adaptateurs maîtres (26) .

12. Système selon la revendication 11, **caractérisé en ce qu'**une instance de coordination est conçue pour effectuer une attribution entre des compteurs et des adaptateurs maîtres (26) par le biais de l'identification de compteur et pour être disponible pour la transmission de messages reçus entre les adaptateurs maîtres (26).

13. Système selon la revendication 10 ou 12, **caractérisé en ce qu'**un chronomètre est conçu pour détecter et transmettre un temps de transmission lors de l'échange de données.

14. Système selon l'une des revendications 10 à 13, **caractérisé en ce que** l'adaptateur maître (26) présente une mémoire d'adresse conçue pour enregistrer des adresses déjà occupées par la passerelle (10) dans la mémoire d'adresse.

15. Système selon l'une des revendications 10 à 14, **caractérisé en ce qu'**au moins un compteur est conçu pour envoyer une adresse en réponse à un signal de diffusion pour l'attribution d'adresse de l'adaptateur esclave (24A, B), et l'adaptateur esclave est conçu pour comparer l'adresse reçue avec des adresses non occupées et pour confirmer l'adresse au compteur émetteur, lorsque celle-ci n'est pas encore occupée.

16. Système selon l'une des revendications 10 à 15, **caractérisé en ce que** l'adaptateur maître (26) est conçu pour répondre individuellement avec les adresses attribuées en réponse à un signal de diffusion pour l'attribution d'adresse de la passerelle (10), comme si les compteurs répondaient respectivement individuellement au signal de diffusion.

17. Système selon l'une des revendications 10 à 16, **caractérisé en ce que** chacun des compteurs présente en outre une identification de compteur biunivoque et l'un des adaptateurs esclaves (24A, B) est conçu pour mettre à disposition l'identification de compteur pour un échange de données avec le compteur.
